# FASCICULE DE BREVET EUROPEEN

(11) **EP 2 908 689 B1**
(45) Date de publication et mention de la délivrance du brevet: **12.12.2018**
(21) Numéro de dépôt: 13786524.2
(22) Date de dépôt: 07.10.2013
(51) Int. Cl.: A45C 5/14, B60B 33/00, A45C 13/26, B29D 30/06

(54) **BAGAGE OU CONTENEUR À ROULETTES COMPORTANT UNE PLURALITÉ DE ROUES PIVOTANTES ET UN DISPOSITIF DE FREINAGE**
GEPÄCK ODER BEHÄLTER MIT DREHBAREN RÄDERN UND BREMSE
LUGGAGE OR CONTAINER HAVING PIVOTING WHEELS AND BREAK SYSTEM

(30) Priorité: 17.10.2012 FR 1259907
(43) Date de publication de la demande: 26.08.2015
(73) Titulaire: Delsey, 93290 Tremblay en France (FR)
(72) Inventeur: JACOBSEN, Ebbe, B-2930 Brasschaat (BE)
(74) Mandataire: Ipside
(86) Numéro de dépôt international: PCT/FR2013/052371
(87) Numéro de publication internationale: WO 2014/060677

(56) Documents cités:
- JP-A- H1 156 438
- JP-A- 2012 135 435
- US-A1- 2006 102 435
- US-A1- 2013 319 800

## Description

L'invention est relative à un bagage ou conteneur à roulettes comportant un dispositif de freinage et une pluralité de roues pivotantes.

Les valises munies de roues pivotantes, notamment de quatre roues pivotantes, présentent le risque d'un roulement spontané et d'un éloignement indésirable de leur propriétaire, en particulier lors de déplacements dans des transports en commun ou lors d'un stationnement sur un plan incliné.

On connaît des valises, bagages ou conteneurs à roulettes comportant un dispositif de freinage et une pluralité de roues pivotantes.

Le freinage de roues pivotantes peut être obtenu par immobilisation à l'aide d'un cliquet actionné par le pied. Le cliquet peut être actionné par un système intégré dans l'axe de pivotement de la roue, ou par un organe externe coopérant par exemple avec une roue dentée.

Un autre système de freinage utilisé notamment dans les chariots de supermarché comporte une plaquette de friction avec un bouton poussoir extérieur pour immobiliser au moins une roulette du chariot de supermarché ou du conteneur par friction sur la bande de roulement. La friction sur la bande de roulement peut également être remplacée par un engrènement avec une roue dentée d'axe coaxial à l'axe de roulement de la roulette pivotante.

On connaît enfin des systèmes de freinage actionnés par câble ou par levier. Le système de freinage par levier peut être commandé par une tige rigide. La commande de freinage peut, dans le cas particulier d'une valise ou conteneur présentant une poignée escamotable, être intégrée à la poignée escamotable. Ce dispositif présente cependant l'inconvénient de ne pouvoir actionner le système de freinage qu'en escamotant ladite poignée escamotable.

US 2006102435 divulgue un bagage comprenant 4 roulettes pivotantes. Deux des 4 roulettes pivotantes sont freinées par un dispositif de type cliquet, lequel dispositif est commande par une commande située près de la poignée de la valise, ledit dispositif de commande agissant sur deux tringles rigides et distinctes l'une de l'autre.

JPH 1156438A divulgue un bagage comportant une pluralité de roulettes pivotantes, l'une au moins desdites roulettes est freinée par un dispositif de freinage commande par un câble Bowden, dont une extrémité est liée au moyen de freinage sur la roue et l'autre extrémité est liée a un bouton de commande.

JP2012 1353435 divulgue un bagage comportant une pluralité de roulettes pivotantes deux d'entre elles au moins étant freinées par un dispositif commande par deux câbles distincts, chaque câble étant lie a une de ses extrémités au moyen de freinage et a son autre extrémité au dispositif de commande.

Un premier but de l'invention est de simplifier et perfectionner l'état de la technique connue, en proposant un nouveau bagage ou conteneur à roulettes ergonomique, de construction simple et présentant une fiabilité améliorée.

L'invention a pour objet un bagage ou conteneur à roulettes selon la revendication 1.

Selon d'autres caractéristiques alternatives de l'invention :
- le bouton d'activation présente une première position correspondant à la libre rotation des roues pivotantes du bagage ou conteneur et une deuxième position correspondant au freinage de la pluralité de roues pivotantes du bagage ou conteneur.
- le bouton de désactivation présente une conformation assurant une fonction d'encliquetage et empêchant le retour du bouton d'activation vers la position correspondant à la libre rotation des roues pivotantes du bagage ou conteneur.
- le bouton de désactivation est monté pivotant par rapport au corps du moyen de commande manuelle, de manière à relâcher les leviers et arrêter le freinage des roues pivotantes en appuyant sur le bouton de désactivation pour libérer le bouton d'activation.
- chaque moyen d'actionnement de freinage est un levier du premier genre monté dans un boîtier relié à un axe de pivotement de roue pivotante et agissant directement ou indirectement sur un organe de friction, pour assurer le freinage d'une roue pivotante.
- chaque moyen d'actionnement agit sur un poussoir coaxial à un axe de pivotement de roue pivotante.
- l'axe de pivotement de roue pivotante est avantageusement un axe creux dans lequel coulisse le poussoir coaxial.
- l'organe de friction est un organe déformable sous l'action du poussoir.
- l'organe de friction est avantageusement une lame élastique formant ressort de rappel du poussoir en une position correspondant au dégagement de la roue pivotante.
- le boîtier d'actionnement de freinage présente avantageusement un fond ouvert appliqué contre le fond du bagage ou conteneur à roulettes.

L'invention sera mieux comprise grâce à la description qui va suivre donnée à titre d'exemple non limitatif en référence aux dessins annexés dans lesquels :
La figure 1 représente schématiquement une vue en élévation d'un bagage ou conteneur à roulettes selon l'invention.
La figure 2 représente schématiquement une vue en perspective d'un boîtier d'actionnement de freinage d'un bagage ou conteneur à roulettes selon l'invention.
La figure 3 représente schématiquement une vue en coupe selon le plan III-III de la figure 2 d'un boîtier d'actionnement de freinage en position de libre circulation d'un bagage ou conteneur à roulettes selon l'invention.
La figure 4 représente schématiquement une vue en coupe analogue à la figure 3 d'un boîtier d'actionnement de freinage en position de freinage d'un bagage ou conteneur à roulettes selon l'invention.
La figure 5 représente schématiquement une vue en perspective d'un moyen de commande manuelle en position de freinage d'un bagage ou conteneur à roulettes selon l'invention.
La figure 6 représente schématiquement une vue en coupe d'un moyen de commande manuelle en position de libre circulation d'un bagage ou conteneur à roulettes selon l'invention.
La figure 7 représente schématiquement une vue en coupe selon le plan VII-VII de la figure 6 d'un moyen de commande manuelle en position de libre circulation d'un bagage ou conteneur à roulettes selon l'invention.
La figure 8 représente schématiquement une vue en coupe selon le plan VIII-VIII de la figure 5 d'un moyen de commande manuelle en position de freinage d'un bagage ou conteneur à roulettes selon l'invention.
La figure 9 représente schématiquement une vue en coupe selon le plan IX-IX de la figure 8 analogue à la figure 7 d'un moyen de commande manuelle en position de freinage d'un bagage ou conteneur à roulettes selon l'invention.

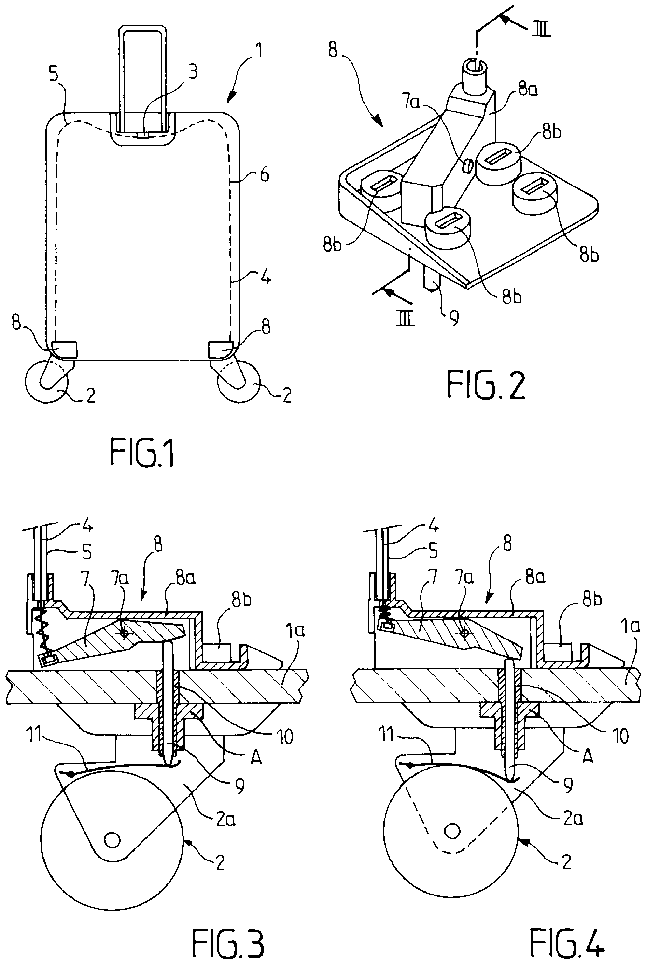

En référence aux figures 1 à 9, les éléments identiques ou fonctionnellement équivalents sont repérés par des chiffres de référence identiques.

Sur la figure 1, un bagage (1) ou conteneur à roulettes pivotantes (2) comporte un moyen de commande manuelle (3) disposé par exemple au voisinage d'une poignée rétractable.

Le moyen (3) de commande manuelle agit sur un câble Bowden unique (4) comportant des gaines (5, 6) souples de mise en tension.

Chaque extrémité du câble (4) agit sur un levier (7) d'actionnement de freinage situé à l'intérieur d'un boîtier (8) relié à l'axe de pivotement d'une roue pivotante (2).

L'activation du moyen de commande (3) manuelle se fait à l'aide d'une manipulation unique.

Le fait de prévoir un câble unique (4) de commande permet d'éviter les différences d'équilibrage et de réglage entre les deux boîtiers (8) de frein de deux roues pivotantes.

La diminution des jeux et des défauts résultant de la présence de câbles multiples est également éliminée, car le réglage s'effectue sur la longueur du câble (4) au montage, sans modification de l'assemblage du dispositif de freinage.

Sur la figure 2, un boîtier (8) de freinage comporte une conformation (8a) permettant le montage d'un levier (7) articulé autour d'un axe (7a).

Le boîtier (8) est un boîtier sans fond muni de colonnettes (8b).

Les colonnettes (8b) permettent le montage du boîtier (8) à l'intérieur et sur le fond de la valise par des vis traversantes coopérant avec un contreboîtier de roue pivotante disposé à l'extérieur de la paroi la du bagage ou conteneur selon l'invention.

Ainsi, la paroi (1a) du bagage ou conteneur selon l'invention est prise en sandwich entre le boîtier (8) de freinage et le contreboîtier de montage de roue pivotante.

Le boîtier (8) permet le montage d'un poussoir (9) guidé en translation sensiblement verticalement.

Sur la figure 3, le boîtier (8) porte un levier (7) articulé autour de l'axe (7a).

La première extrémité du levier (7) articulé autour de l'axe (7a) peut être actionné par une première extrémité du câble Bowden (4), avec éventuellement interposition d'un ressort de rappel .

Le levier (7) appuie par sa deuxième extrémité sur le poussoir (9).

Le poussoir (9) est monté coaxialement à l'axe (A) de pivotement de la roue pivotante (2).

Un tube de guidage (10) du poussoir (9) est également monté coaxialement à l'axe (A) de pivotement de la roue pivotante (2).

La chape (2a) de roue pivotante porte une lame (11) élastique, dont l'extrémité opposée à son extrémité de fixation à la chape (2a) est soumise à l'action du poussoir (9).

Sur la figure 3, le levier (7) n'est pas tiré vers le haut par le câble Bowden (2), de sorte que la force élastique de la lame (11) repousse le poussoir (9) vers le haut et permet le libre roulement de la roue pivotante (2).

Le ressort de rappel monté à une première extrémité du câble Bowden (4) repousse la première extrémité du levier (7) articulé autour de l'axe (7a) vers le bas et évite ainsi que le levier (7) appuie par sa deuxième extrémité sur le poussoir (9).

Sur la figure 4, le câble Bowden (2) exerce une traction sur la première extrémité du levier (7), de sorte que la deuxième extrémité du levier (7) appuie sur le poussoir (9).

L'appui exercé sur le poussoir (9) déforme élastiquement la lame (11) au contact de la roue (2).

La lame (11) déformée élastiquement freine la roue (2) par friction sur la bande de roulement de la roue (2).

L'invention n'est pas limitée à une friction sur la bande de roulement de la roue pivotante (2), mais s'étend au contraire à toute forme de freinage de la roue pivotante (2) par une lame élastique agissant sur un organe solidaire de la roue pivotante (2), par exemple sur un disque concentrique de plus faible diamètre.

Le levier (7) est de préférence un levier du premier genre, présentant un rapport d'amplification supérieur à 1.

Ce rapport d'amplification supérieur à 1 est défini par le rapport entre la longueur du bras de levier situé entre l'axe (7a) d'articulation et l'extrémité du câble Bowden (2) et la longueur du bras de levier situé entre l'axe d'articulation (7a) et le poussoir (9).

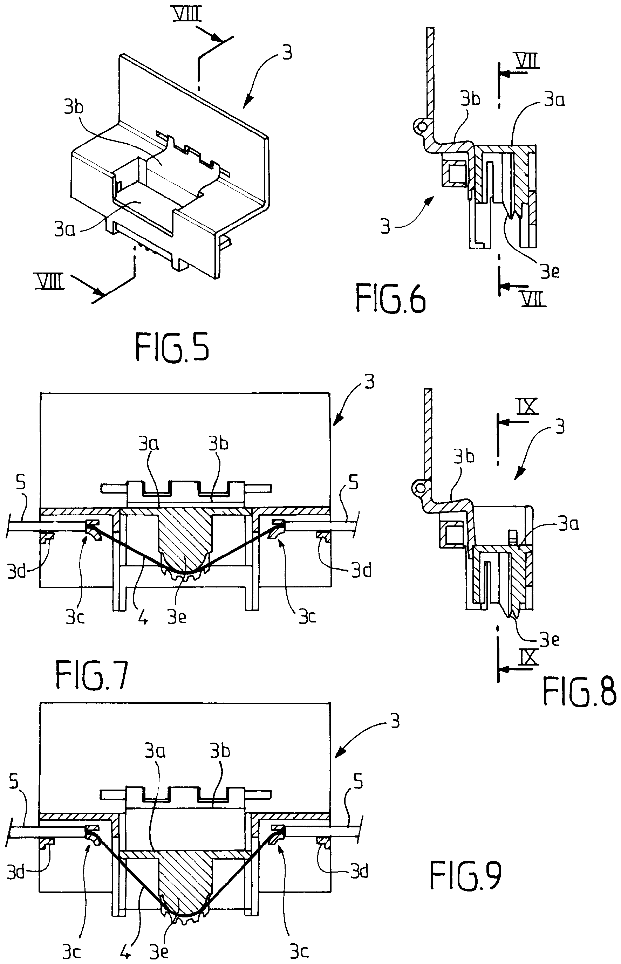

Sur la figure 5, un moyen (3) de commande manuelle de freinage est représenté en perspective.

Le moyen de commande (3) manuelle présente un premier bouton, dit « bouton d'activation », (3a) et un deuxième bouton, dit « bouton de désactivation », (3b).

Sur la figure 6, le bouton d'activation (3a) est en position relevée, correspondant à la libre rotation des roues pivotantes du bagage ou conteneur selon l'invention.

Une protubérance (3e) du moyen de commande manuelle (3) est conformée pour guider le câble Bowden à l'aide de dents, sans le pincer.

Le bouton de désactivation (3b) est dans une position sensiblement verticale, de sorte que son extrémité inférieure en forme de crochet ou de cliquet n'est pas active et ne retient pas le bord supérieur du bouton d'activation (3a).

Sur la figure 7, correspondant à la position de la figure 6, le bouton d'activation (3a) est en position relevée correspondant sensiblement à un affleurement aux bords latéraux du moyen de commande manuelle (3).

Le moyen de commande manuelle (3) comporte également les conformations (3c, 3d) de guidage et de montage du câble Bowden (2) conçues pour utiliser l'élasticité propre du câble Bowden et pour assurer un rappel élastique vers le haut du bouton d'activation (3a), lorsqu'il n'est pas encliqueté dans une position correspondant au freinage.

La courbure en « chapeau de gendarme » du câble Bowden guidé par les extrémités de montage (3c) des gaines (5, 6) souples de mise en tension et par la protubérance (3e) permet en effet de profiter de l'effet élastique du câble faisant partie du câble Bowden (2).

Sur la figure 8, le bouton d'activation (3a) a été enfoncé en position de freinage, et le bouton (3b) assure une fonction d'encliquetage empêchant le retour élastique vers le haut du bouton d'activation (3a).

Dans cette position de freinage, le blocage du bouton d'activation (3a) est maintenu encliqueté du fait de la transmission de la force élastique de la lame élastique (11) à travers le montage mécanique ainsi réalisé.

Sur la figure 9, le bouton d'activation (3a) est dans la position de la figure 8 correspondant au freinage.

Dans cette position, l'extrémité inférieure (3e) de guidage à l'aide de dents du câble Bowden (2) assure une traction vers le bas et un relevage des extrémités du câble Bowden (2) unique, de sorte que les leviers (7) sont relevés vers le haut dans une position telle que celle de la figure 4.

Le bouton d'activation (3a) est maintenu en position par le bouton (3b) présentant une extrémité en forme de crochet ou de cliquet. Le bouton (3b) est lui-même articulé autour d'un axe fixé au corps du moyen de commande manuelle (3).

Pour relâcher les leviers (7) et arrêter le freinage des roues pivotantes (2), il suffit d'appuyer sur l'extrémité du bouton (3b) pour désactiver l'encliquetage du bouton (3a).

Le rappel élastique vers le haut du bouton (3a) par les lames élastiques (11) agissant sur les poussoirs (9) et les leviers (7) assure alors une traction du câble vers le bas, ce qui relève automatiquement le bouton d'activation (3a), et permet de revenir ainsi à la position des figures 6 et 7.

L'invention décrite en référence à un mode de réalisation particulier ne lui est nullement limitée, mais couvre au contraire toute modification de forme et toute variante de réalisation dans le cadre des revendications annexées.

Enfin, l'invention, décrite en référence à un système de réglage de tension et/ou de longueur de câble au niveau de la roue, s'étend à la variante selon laquelle la pièce de mise en tension intègre un système visant à régler la tension et/ou la longueur du câble après le montage final du bouton d'activation (3a) par l'extérieur.

## Revendications

1. Bagage (1) ou conteneur comprenant une pluralité de roulettes pivotantes (2) et comportant un dispositif de freinage agissant sur au moins deux desdites roulettes pivotantes (2), comprenant un moyen de commande (3) manuelle comportant un premier bouton, dit « bouton d'activation » (3a) et un deuxième bouton, dit « bouton de désactivation » (3b), **caractérisé en ce que** le moyen de commande manuelle actionne un câble, dit câble Bowden (4), passant à travers deux gaines (5,6) souples de mise en tension, et que ledit câble agit à chacune de ses deux extrémités sur un moyen (7) d'actionnement de freinage d'une desdites roulettes pivotantes (2).

2. Bagage ou conteneur selon la revendication 1, dans lequel le bouton d'activation (3a) comporte une première position correspondant à la libre rotation des roulettes pivotantes (2) du bagage ou conteneur et une deuxième position correspondant au freinage de la pluralité de roulettes pivotantes (2) du bagage ou conteneur.

3. Bagage ou conteneur selon la revendication 1, dans lequel le bouton de désactivation (3b) présente une conformation assurant une fonction d'encliquetage et empêchant le retour du bouton d'activation (3a) vers la position correspondant à la libre rotation des roulettes pivotantes (2) du bagage ou conteneur.

4. Bagage ou conteneur selon la revendication 1 ,dans lequel le bouton de désactivation (3b) est monté pivotant par rapport au corps du moyen de commande manuelle (3), de manière à relâcher les leviers (7) et arrêter le freinage des roulettes pivotantes (2) en appuyant sur le bouton de désactivation (3b) pour libérer le bouton (3a) d'activation .

5. Bagage ou conteneur selon la revendication 1, dans lequel chaque moyen d'actionnement (7) de freinage est un levier monté dans un boîtier (8) relié à un axe (A) de pivotement d'une roulette pivotante (2) et agissant sur un organe (11) de friction, pour assurer le freinage d'une roulette pivotante (2).

6. Bagage ou conteneur selon la revendication 1 ou la revendication 5, dans lequel chaque moyen d'actionnement (7) agit sur un poussoir (9) coulissant dans un axe creux (10) de pivotemment de la roulette pivotante (2).

7. Bagage selon la revendication 6, dans le quel l'organe (11) de friction est un organe (11) déformable sous l'action du poussoir (9).

8. Bagage selon la revendication 7, dans lequel l'organe (11) de friction est une lame (11) élastique formant ressort de rappel du poussoir (9) en une position correspondant au dégagement d'une roulette pivotante (2).

9. Bagage selon la revendication 2, dans lequel le boîtier (8) d'actionnement de freinage comprend un fond ouvert appliqué contre le fond du bagage (1) ou conteneur à roulettes pivotantes (2).

## Patentansprüche

1. Koffer (1) oder Behälter, der eine Vielzahl von Schwenkrollen (2) umfasst und eine auf mindestens zwei der Schwenkrollen (2) wirkende Bremsvorrichtung umfasst, die ein manuelles Steuermittel (3) umfasst, welches eine erste Taste, "Aktivierungstaste" (3a) genannt, und eine zweite Taste, "Deaktivierungstaste" (3b) genannt, umfasst, **dadurch gekennzeichnet, dass** das manuelle Steuermittel einen Seilzug, Bowdenzug (4) genannt, betätigt, der durch zwei biegsame Spannhüllen (5, 6) hindurchläuft, und dass der Seilzug an jedem seiner zwei Enden auf ein Bremsbetätigungsmittel (7) einer der Schwenkrollen (2) wirkt.

2. Koffer oder Behälter nach Anspruch 1, wobei die Aktivierungstaste (3a) eine erste Stellung umfasst, die dem freien Drehen der Schwenkrollen (2) des Koffers oder Behälters entspricht, und eine zweite Stellung, die der Bremsung der Vielzahl von Schwenkrollen (2) des Koffers oder Behälters entspricht.

3. Koffer oder Behälter nach Anspruch 1, wobei die Deaktivierungstaste (3b) eine Formgebung aufweist, die eine Einrastfunktion sicherstellt und die Rückkehr der Aktivierungstaste (3a) zu der Stellung, die dem freien Drehen der Schwenkrollen (2) des Koffers oder Behälters entspricht, verhindert.

4. Koffer oder Behälter nach Anspruch 1, wobei die Deaktivierungstaste (3b) in Bezug auf den Körper der manuellen Steuervorrichtung (3) schwenkend montiert ist, sodass bei Drücken auf die Deaktivierungstaste (3b), um die Aktivierungstaste (3a) zu befreien, die Hebel (7) gelöst und die Bremsung der Schwenkrollen (2) gestoppt wird.

5. Koffer oder Behälter nach Anspruch 1, wobei jedes Bremsbetätigungsmittel (7) ein Hebel ist, der in einem Gehäuse (8) montiert ist, welches mit einer Schwenkachse (A) einer Schwenkrolle (2) verbunden ist und auf ein Reiborgan (11) wirkt, um die Bremsung einer Schwenkrolle (2) sicherzustellen.

6. Koffer oder Behälter nach Anspruch 1 oder Anspruch 5, wobei jedes Betätigungsmittel (7) auf einen Schieber (9) wirkt, der in einer hohlen Schwenkachse (10) der Schwenkrolle (2) gleitet.

7. Koffer nach Anspruch 6, wobei das Reiborgan (11) ein unter der Einwirkung des Schiebers (9) verformbares Organ (11) ist.

8. Koffer nach Anspruch 7, wobei das Reiborgan (11) ein elastisches Blatt (11) ist, das eine Feder zum Rückstellen des Schiebers (9) in eine Stellung bildet, welche der Freigabe einer Schwenkrolle (2) entspricht.

9. Koffer nach Anspruch 2, wobei das Bremsbetätigungsgehäuse (8) einen offenen Boden umfasst, der gegen den Boden des Koffers (1) oder Behälters mit Schwenkrollen (2) anliegt.

## Claims

1. Luggage (1) or container comprising a plurality of pivotable wheels (2) and comprising a braking device acting on at least two of said pivotable wheels (2), comprising a manual control means (3) comprising a first button, referred to as "activation button" (3a) and a second button, referred to as "deactivation button" (3b), **characterised in that** the manual control means actuates a cable, referred to as the Bowden cable (4), passing through two flexible tensioning sheaths (5, 6), and that said cable acts at each one of its two ends on a means (7) for the braking actuating of one of said pivotable wheels (2).

2. Luggage or container according to claim 1, wherein the activation button (3a) comprises a first position corresponding to the free rotation of the pivotable wheels (2) of the luggage or container and a second position corresponding to the braking of the plurality of pivotable wheels (2) of the luggage or container.

3. Luggage or container according to claim 1, wherein the deactivation button (3b) has a conformation that provides a snap-fitting function and preventing the return of the activation button (3a) to the position corresponding to the free rotation of the pivotable wheels (2) of the luggage or container.

4. Luggage or container according to claim 1, wherein the deactivation button (3b) is pivotably mounted with respect to the body of the manual control means (3), in such a way as to release the levers (7) and stop the braking of the pivotable wheels (2) by pressing the deactivation button (3b) in order to release the deactivation button (3a).

5. Luggage or container according to claim 1, wherein each means of actuating (7) braking is a lever mounted in a housing (8) connected to a pivotal axis (A) of a pivotable wheel (2) and acting on a friction member (11), in order to provide the braking of a pivotable wheel (2).

6. Luggage or container according to claim 1 or claim 5, wherein each means of actuating (7) acts on a pusher (9) sliding in a hollow pivotal axis (10) of the pivotable wheel (2).

7. Luggage according to claim 6, wherein the friction member (11) is a member (11) that can be deformed under the action of the pusher (9).

8. Luggage according to claim 7, wherein the friction member (11) is an elastic blade (11) forming a spring for returning the pusher (9) to a position that corresponds to the clearing of a pivotable wheel (2).

9. Luggage according to claim 2, wherein the housing (8) of the actuating of braking comprises an open bottom applied against the bottom of the luggage (1) or container with pivotable wheels (2).
